# EUROPÄISCHE PATENTANMELDUNG

(11) **EP 0 989 715 A1**
(43) Veröffentlichungstag der Anmeldung: **29.03.2000**
(21) Anmeldenummer: 99118271.8
(22) Anmeldetag: 14.09.1999
(51) Int. Cl.: H04M 1/66, H04M 1/72

(54) **Rufnummer als Zugriffsberechtigung auf ein Telefonendgerät**

(30) Priorität: 23.09.1998 DE 19843662
(71) Anmelder: SIEMENS AKTIENGESELLSCHAFT, 80333 München (DE)
(72) Erfinder: Billich, Franz, 81377 München (DE)

(57) **Zusammenfassung**

Die Erfindung betrifft ein Kommunikationsendgerät mit Mitteln zur Überprüfung einer Zugriffsberechtigung. Erfindungsgemäß sind die Mittel bei einem ankommenden Ruf zum Vergleich der Ruffnummer mit mindestens einer vorgegebenen Nummer ausgebildet.

## Beschreibung

Die Erfindung betrifft ein Kommunikationsendgerät gemäß dem Oberbegriff des Patentanspruchs.

Telefone oder allgemein Kommunikationsendgeräte der Komfortklasse weisen Zusatzeinrichtungen beziehungsweise Zusatzfunktionen, wie beispielsweise einen Anrufbeantworter auf. Weiter kann das Telefon als Alarmanlage für Überwachungszwecke ausgebildet sein. Zur Abfrage des Anrufbeantworters beziehungsweise zum Ein- oder Ausschalten der Überwachung wird nach der Zugriffsberechtigung des Anrufers gefragt. Die Zugriffsberechtigung kann durch Eingabe einer PIN (persönliche Identifizierungs Nummer) oder eines Passwortes erlangt werden. Daneben sind weitere Funktionen einstellbar, wie beispielsweise Rufnummernsperre, Rufumleitung, Änderung des Ansagetextes und ähnliches mehr.

Bei einer Fernabfrage beziehungsweise allgemein Fernbedienung des Telefons wird in analoger Weise die Zugriffsberechtigung überprüft.

Der Erfindung liegt die Aufgabe zugrunde, eine solche Fernbedienung, insbesondere von einem mobilen Funkgerät aus, zu vereinfachen.

Diese Aufgabe wird erfindungsgemäß durch die im Patentanspruch angegebenen Merkmale gelöst.

Bei dem erfindungsgemäßen Kommunikationsendgerät muß bei der Fernbedienung keine PIN-Eingabe zur Erlangung der Zugriffsberechtigung erfolgen.

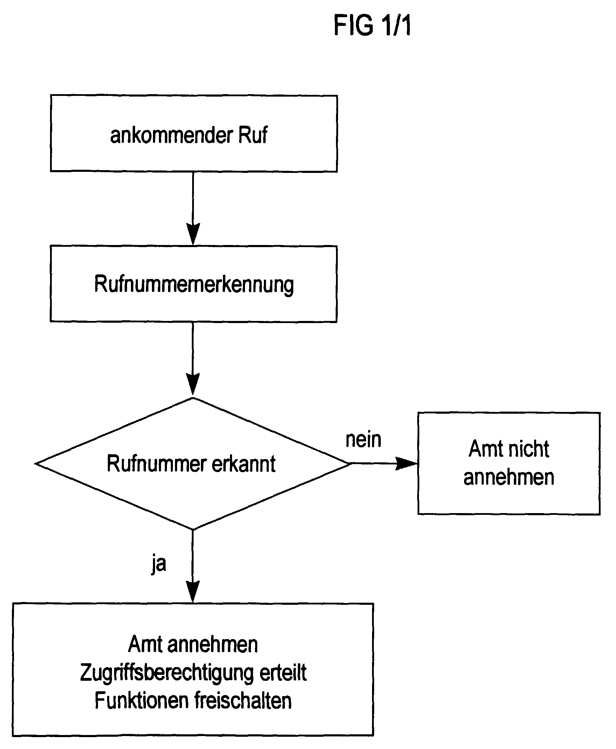

Im folgenden wird die Erfindung anhand eines in der Zeichnung dargestellten Ausführungsbeispieles beschrieben.

In der einzigen Figur ist ein Ablaufdiagramm dargestellt, anhand dessen die Erfindung näher beschrieben wird.

Die Erfindung geht aus von einem an sich bekannten Kommunikationsendgerät, das Mittel zur Überprüfung der Zugriffsberechtigung aufweist. Die Zugriffsberechtigung ist beispielsweise zur Bedienung eines Anrufbeantworters, einer Rufweiterleitung, oder sonstiger Funktionen, wie einer Alarm- oder Überwachungsschaltung, notwendig.

Diese Funktionen des Kommunikationsendgerätes sind durch einen externen Anruf schaltbar. Erfindungsgemäß wird hierbei die Telefonnummer des rufenden Endgerätes im Kommunikationsendgerät mit einer vorgegebenen Nummer verglichen. Bei Übereinstimmung der beiden Nummern wird eine anschließend zu aktivierende Funktion freigeschaltet. Durch die Rufnummernerkennung wird die Zugriffsberechtigung erlangt. Hierzu können auch mehrere mögliche Rufnummern abgespeichert sein.

Die Erfindung ist vorteilhaft bei drahtlos arbeitenden Funktelefonen anwendbar. Bei einem Anruf von diesem Gerät aus hat der Benutzer sofort die Zugriffsberechtigung auf die Funktionen seines Heim-Apparates. Weiter kann beispielsweise beim Anruf von einem dienstlichen Telefon aus ohne zusätzliche Eingabe einer Identifizierung die Rufumleitung beim Heimgerät aktiviert werden.

## Patentansprüche

1. Kommunikationsendgerät mit Mitteln zur Überprüfung einer Zugriffsberechtigung,
**dadurch gekennzeichnet,** daß
die Mittel bei einem ankommenden Ruf zum Vergleich der Rufnummer mit mindestens einer vorgegebenen Nummer ausgebildet sind.
